# EUROPÄISCHE PATENTSCHRIFT

(11) **EP 0 995 280 B1**
(45) Veröffentlichungstag und Bekanntmachung des Hinweises auf die Patenterteilung: **12.09.2001**
(21) Anmeldenummer: 98930528.9
(22) Anmeldetag: 09.07.1998
(51) Int. Cl.: H04B 10/06, H04B 10/158, H04B 1/16

(54) **AUFWECKSCHALTUNG FÜR EIN ELEKTRONISCHES GERÄT**
WAKE-UP CIRCUIT FOR AN ELECTRONIC APPARATUS
CIRCUIT DE REVEIL POUR APPAREIL ELECTRONIQUE

(30) Priorität: 10.07.1997 AT 118797
(43) Veröffentlichungstag der Anmeldung: 26.04.2000
(73) Patentinhaber: EFKON- Entwicklung Forschung & Konstruktion von Sondermaschinen Ges.m.b.H., 8045 Graz (AT)
(72) Erfinder: PAMMER, Raimund, A-8020 Graz (AT); RIEDER, Helmut, A-8020 Graz (AT); BOH, Wolfgang, A-8020 Graz (AT)
(74) Vertreter: Weinzinger, Arnulf, Dipl.-Ing.
(86) Internationale Anmeldenummer: AT9800169
(87) Internationale Veröffentlichungsnummer: WO9903219

(56) Entgegenhaltungen:
- EP-A- 0 367 333
- US-A- 4 871 920
- US-A- 5 115 236
- US-A- 5 355 242

## Beschreibung

Die Erfindung betrifft eine Aufweckschaltung für ein elektronisches Gerät, mit einem Eingangskreis zum Empfangen von Infrarotsignalen, und mit einem an den Eingangskreis angeschlossenen Verstärker, dessen Ausgang mit einer Schaltstufe zum Einschalten des Gerätes verbunden ist.

Derartige Schaltungen, auch "Wake-up"-Schaltungen genannt, werden beispielsweise bei Fernsehgeräten oder allgemein bei Empfängern eingesetzt, um ein im "Stand By"-Modus befindliches Gerät einzuschalten.

Aufweckschaltungen sollten einen möglichst geringen Stromverbrauch aufweisen, da sie ständig an eine (Batterie-)Stromversorgung angeschlossen sind. Zum gewünschten Zeitpunkt empfängt die Aufweckschaltung ein externes Infrarotsignal, welches das Gerät bzw. einen Stromverbraucher über die Schaltstufe aktiviert. Hierbei ist auch zu berücksichtigen, daß bei starkem Hintergrundlicht ein erhöhtes Stromrauschen auftritt, welches das Signal-/Rauschverhältnis verschlechtert.

Aufgabe der Erfindung ist die Schaffung einer Aufweckschaltung der eingangs genannten Art, welche auch bei starkem Hintergrundlicht einen selektiven Empfang und eine Verstärkung der Signale ermöglicht, wobei die Schaltungskonfiguration nichtsdestoweniger so sein soll, daß ein äußerst niedriger Stromverbrauch im Warte ("Schlaf")-Betriebszustand erzielt wird.

Diese Aufgabe wird erfindungsgemäß dadurch gelöst, daß der Eingangskreis eine Parallelschaltung von zumindest zwei Serienschaltungen von Infrarotdetektoren sowie einen Parallelschwingkreis enthält, und daß der Verstärker ein Bandpaßverstärker ist, dessen Ausgang mit einem Signaldetektor verbunden ist, an den die Schaltstufe angeschlossen ist. Durch diese Ausbildung kann der vorstehend angeführten Zielsetzung gut entsprochen werden. Durch die Parallelschaltung von Infrarotdetektoren in Serie enthaltenden Zweigen sowie der Filterwirkung des Parallelschwingkreises wird ein erhöhtes Signal-/Rauschverhältnis erzielt. Die erfindungsgemäße Aufweckschaltung eignet sich daher besonders gut für Anwendungen im Freien, beispielsweise zum Einschalten von Infrarotsendern bei Straßen-Mautsystemen.

Gemäß einer bevorzugten Ausführungsform der Erfindung ist vorgesehen, daß der Signaldetektor mit zwei miteinander verbundenen Integrierkreisen und einem Komparator ausgebildet ist, wobei der eine Eingang des Komparators mit dem Ausgang des einen Integrierkreises und der andere Eingang mit dem Ausgang des anderen Integrierkreises verbunden ist. Durch diese Maßnahme findet eine selektive Überprüfung der Dauer des Signals statt, d.h. das Einschalten der Schaltstufe erfolgt erst ab einer bestimmten Mindestdauer des Signals.

Hierbei ist es von Vorteil, wenn der eine Integrierkreis einen Kondensator aufweist, der mit einer, einen Spannungsteiler bildenden Serienschaltung von Widerständen verbunden ist, daß der andere Integrierkreis einen an den Abzweigungspunkt des Spannungsteilers angeschlossenen Widerstand und einen mit diesem Widerstand verbundenen Kondensator aufweist, wobei die Entlade-Zeitkonstante des einen Integrierkreises kürzer als die Entlade-Zeitkonstante des anderen Integrierkreises ist. Dadurch kann, trotz einer geringen Anzahl von elektronischen Bauteilen, eine weitgehende Sicherheit der Funktion des Signaldetektors unabhängig von Bauteiltoleranzen und Schwankungen der Versorgungsspannung erreicht werden.

Eine vorteilhafte und einfache Ausbildung des Bandpaßverstärkers ist dadurch gekennzeichnet, daß der Bandpaßverstärker ein mehrstufiger Transistorverstärker mit Gleichstromkopplung ist, wobei die Ruhe-Arbeitsströme der einzelnen Transistoren jeweils auf ein Minimum eingestellt sind, wodurch eine besonders geringe Belastung der Versorgungsspannungsquelle erzielt wird.

Um die Selektivität der Aufweckschaltung hinsichtlich der Frequenz der Signale noch weiter zu verbessern, ist vorgesehen, daß die untere Grenzfrequenz des Bandpaßverstärkers an die untere Grenzfrequenz des Parallelschwingkreises angepaßt ist, so daß eine zusätzliche Verbesserung des Signal-/Rauschverhältnisses resultiert.

Die Erfindung wird nachfolgend anhand eines in der Zeichnung dargestellten bevorzugten Ausführungsbeispiels, auf das sie jedoch nicht beschränkt sein soll, noch weiter erläutert. Es zeigen:
Fig.1 ein Blockschaltbild einer Aufweckschaltung;
Fig.2 eine praktische, bevorzugte Ausführungsform dieser Aufweckschaltung; und
die Fig.3a bis 3f Zeitdiagramme zur Erläuterung der Funktion der Aufweckschaltung.

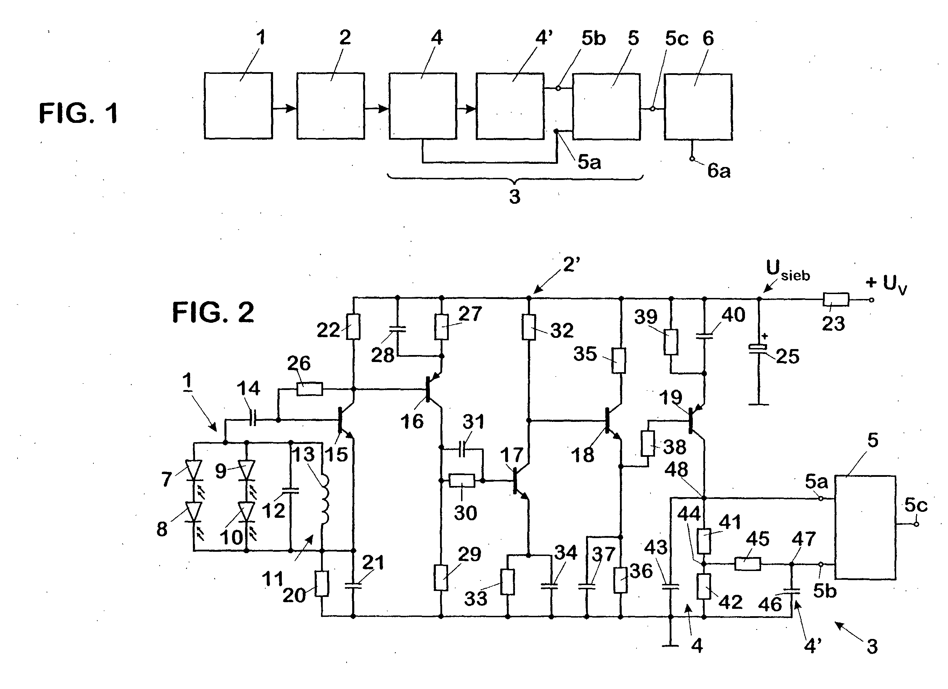

In Fig.1 bezeichnet 1 einen Eingangskreis zum Empfangen eines Infrarotsignals, welches einem Verstärker 2 zugeführt wird. An den Verstärker 2 ist ein Signaldetektor 3 angeschlossen, der einen ersten Integrierkreis 4 enthält, dessen Ausgang an einen Eingang 5a eines Komparators 5 gelegt ist, dessen zweiter Eingang 5b an den Ausgang eines zweiten Integrierkreises 4' angeschlossen ist, der wiederum mit dem ersten Integrierkreis 4 verbunden ist. Die beiden Integrierkreise 4, 4' und der Komparator 5 bilden somit zusammen den Signaldetektor 3, der selektiv auf die Gesamtdauer eines empfangenen Aufweck-Signals ausgelegt ist bzw. anspricht, wie weiter unten näher erläutert werden wird. Der Komparator 5 kann aus einzelnen elektronischen Bauteilen aufgebaut oder als integrierte Schaltung ausgebildet sein.

Der Ausgang 5c des Komparators 5 ist mit einer Schaltstufe 6 zum Ein- bzw. Ausschalten eines elektronischen Gerätes (nicht dargestellt) verbunden, wobei die Schaltstufe 6 einen Halte-Eingang 6a aufweist, dessen Funktion unten erläutert wird.

Wie aus Fig.2 ersichtlich ist, besteht der Eingangskreis 1 aus einer Parallelschaltung von zwei Serienschaltungen von Infrarotdetektoren in Form von Infrarot-Fotodioden 7 bis 10 sowie einem Parallelschwingkreis 11 mit einem Kondensator 12 und einer Spule 13. Der Eingangskreis 1 ist einerseits über einen Koppelkondensator 14 mit der Basis eines npn-Transistors 15 verbunden, welcher die erste Stufe des Verstärkers 2 bildet, der als fünfstufiger Bandpaßverstärker 2' mit Gleichstrom-gekoppelten npn-bzw. pnp-Transistoren 15 bis 19 ausgebildet ist. Andererseits ist der Eingangskreis 1 mit dem Emitter des Transistors 15 verbunden, dessen Emitterwiderstand 20, mit einem Kondensator 21 überbrückt, mit Masse verbunden ist, und dessen Kollektorwiderstand 22 mit einer positiven Spannung U_{sieb} verbunden ist, die über einen Siebwiderstand 23 von einer positiven Versorgungsspannung U_{V} erhalten wird; dabei ist ein Siebkondensator 25 nach dem Siebwiderstand 23 gegen Masse geschaltet. Zwischen dem Kollektor und der Basis des Transistors 15 ist ein Vorspannungsbzw. Gegenkopplungswiderstand 26 angeschlossen.

Die Basis des die zweite Stufe des Bandpaßverstärkers 2' bildenden pnp-Transistors 16 ist direkt mit dem Kollektor des Transistors 15 der ersten Stufe verbunden. Der Emitterwiderstand 27 des Transistors 16 ist mit einem Kondensator 28 überbrückt und mit der Spannung U_{sieb} verbunden, während der Kollektorwiderstand 29 an Masse liegt.

Die Basis des die dritte Stufe des Bandpaßverstärkers 2' bildenden npn-Transistors 17 ist über einen Widerstand 30 und einen parallel liegenden Koppelkondensator 31 mit dem Kollektor des Transistors 16 verbunden. Der Kollektorwiderstand 32 dieses Transistors 17 ist mit der Spannung U_{sieb} verbunden, während der Emitterwiderstand 33 mit einem Kondensator 34 überbrückt ist und an Masse liegt.

Die Basis des die vierte Stufe des Bandpaßverstärkers 2' bildenden npn-Transistors 18 ist direkt mit dem Kollektor des Transistors 17 verbunden. Der Kollektorwiderstand 35 des Transistors 18 ist mit der Spannung U_{sieb} verbunden, während der Emitterwiderstand 36 mit einem Kondensator 37 überbrückt ist und an Masse liegt.

Die Basis des die fünfte Stufe des Bandpaßverstärkers 2' bildenden pnp-Transistors 19 ist über einen Widerstand 38 mit dem Emitter des Transistors 18 verbunden. Der Emitterwiderstand 39 des Transistors 19 ist mit einem Kondensator 40 überbrückt und mit der Spannung U_{sieb} verbunden.

Der Kollektorwiderstand des Transistors 19 besteht aus einer mit Masse verbundenen Serienschaltung zweier Widerstände 41 und 42, die durch einen Kondensator 43 überbrückt ist, wobei die Widerstände 41, 42 und der Kondensator 43 den ersten Integrierkreis 4 bilden, der eine durch diese Komponenten 41, 42, 43 bestimmte Entlade-Zeitkonstante τ₁ besitzt. Vom Verbindungspunkt 44 der Widerstände 41, 42 führt eine den zweiten Integrierkreis 4' bildende Serienschaltung eines Widerstandes 45 und eines Kondensators 46 zur Masse. Der eine Eingang 5a des Komparators 5 ist an den Verbindungspunkt 48 zwischen dem Kollektor des Transistors 19, dem Kondensator 43 und dem Widerstand 41 angeschlossen, während der andere Eingang 5b mit dem Verbindungspunkt 47 zwischen dem Kondensator 46 und dem Widerstand 45 verbunden ist.

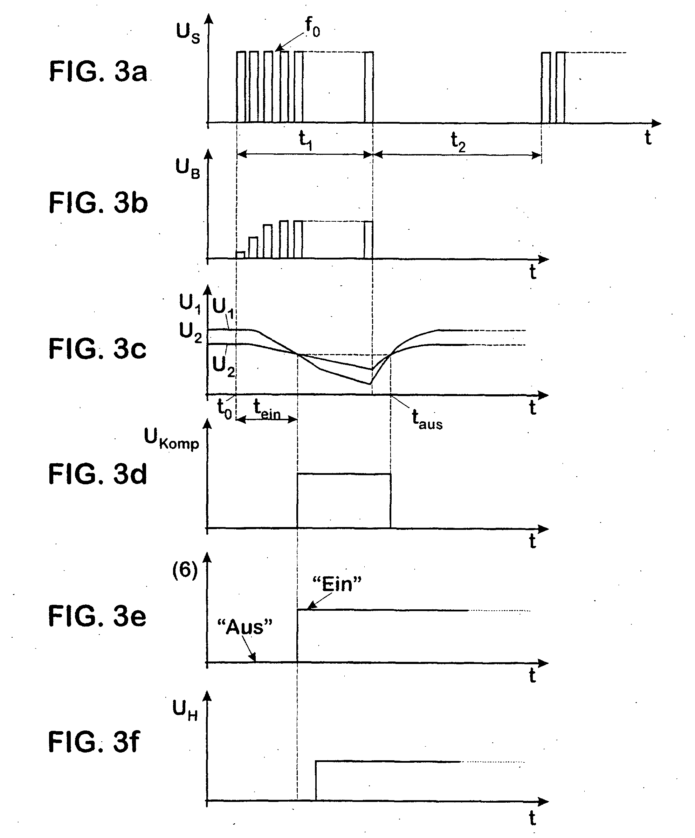

Anschließend wird die Funktion der Aufweckschaltung nach Fig.2 unter Einbeziehung der Zeitdiagramme gemäß Fig.3a bis 3f erläutert.

Als Sende-Modulationsart für Aufweckschaltungen eignet sich die FSK-OOSK(Frequency Shift Keying-On Off Shift Keying)- Modulation, da sie einfach und störungssicher ist, d.h. ein nicht näher dargestellter, an sich herkömmlicher Sender emittiert eine bestimmte Zeit t₁ lang ein Sendesignal V_{S} in Form eines Impuls-Pakets von z.B. 10 Impulsen mit einer Frequenz f₀, worauf eine Sendepausezeit t₂ folgt (s.Fig.3a).

Das von den Fotodioden 7 bis 12 aufgenommene Sendesignal U_{S} (s. Fig.3a) wird in elektrische Impulse umgesetzt, die sich im Parallelschwingkreis 11 des Eingangskreises 1 zeitlich aufschaukeln, wenn der Parallelschwingkreis 11 auf die Frequenz f₀ abgestimmt ist. Die Güte des Resonanzkreises 11 ist in diesem Fall relativ klein gewählt, um den Einfluß der durch das Hintergrundlicht bewirkten veränderlichen Kapazität und des Innenwiderstands der Fotodioden 7 bis 10 sowie der Toleranzen der Induktivität der Spule 13 und der Kapazität des Kondensators 12 des Parallelresonanzkreises 11 möglichst gering zu halten.

Eine weitere selektive Verstärkung der Impulse erfolgt im Bandpaßverstärker 2', dessen untere Grenzfrequenz im wesentlichen durch die Dimensionierung der RC-Glieder 20, 21, 27, 28, 33, 34, 36, 37 und 39, 40 in den Emitterkreisen der Transistoren 15 bis 19 sowie der Koppelkondensatoren 14 und 31 der Transistoren 5 und 17, und dessen obere Grenzfrequenz durch die Grenzfrequenz der Transistoren 15 bis 19 festgelegt ist, wobei die untere Grenzfrequenz des Bandpaßverstärkers 2 an die untere Grenzfrequenz des Parallelschwingkreises 11 angepaßt ist.

Hierbei sind die Arbeitspunkte der Transistoren 15 bis 19 durch die Wahl der entsprechenden Widerstände in Basis- bzw. Kollektorkreisen der Transistoren so eingestellt, daß der RuheStrom jeder der fünf Stufen des Bandpaßverstärkers 2' im *µ*A-Bereich liegt, wodurch ein außerordentlich niedriger "Bereitschaftsstrom" aus der Versorgungsspannung U_{V} entnommen wird.

Durch die an der Basis des Transistors 19 auftretenden Impulse U_{B} (s. Fig.3b) wird dieser bei jedem Impuls gesperrt, d.h. der Kondensator 43 wird über die Widerstände 41 und 42 entladen. Desgleichen entlädt sich der Kondensator 46 über die Widerstände 45 und 42, wodurch eine zweite Entlade-Zeitkonstante τ₂ für diesen Kreis definiert ist, wobei die Entladezeit-Konstante τ₁ des Kondensators 43 etwa 1/10 der Entladezeit-Konstante τ₂ des Kondensators 46 gewählt ist, und wobei der Kondensator 46 im geladenen Zustand auf eine Spannung U₂ aufgeladen ist, die durch den Spannungsteiler mit den Widerständen 41, 42 auf etwa 80% der Spannung U₁ des Kondensators 43 festgelegt ist. Demnach wird ab dem Zeitpunkt t₀ des Auftretens der Impulse nach einer durch die beiden Entladezeit-Konstanten τ₁ und τ₂ festgelegten Zeit tₑᵢₙ die sinkende Spannung U₁ am Eingang 5a gleich der sinkenden Spannung U₂ am Eingang 5b des Komparators 5 sein (s. Fig.3c), so daß die Spannung Uₖₒₘₚ (s. Fig. 3d) am Ausgang 5c des Komparators 5 steigt und in der Folge die Schaltstufe 6 vom Betriebszustand "Aus" auf "Ein" (s. Fig.3e) geschaltet wird. Die Schaltstufe 6 kann als Relais oder Leistungs-Halbleiterbauteil ausgebildet sein, wobei gegebenenfalls zwischen dem Komparator 5 und der Schaltstufe 6 eine Treiberstufe (nicht dargestellt) vorgesehen ist.

Sobald von dem an die Schaltstufe 6 angeschlossenen Gerät (nicht dargestellt) vor dem Ablauf der Zeitdauer t₁, in der, wie oben erwähnt, die Impulse gesendet werden, ein Haltesignal U_{H} (s. Fig.3f) an den Halte-Eingang 6a der Schaltstufe 6 angelegt wird, verbleibt diese auf die Dauer des Haltesignals U_{H} im Betriebszustand "Ein".

Der Komparator 5 wird zum Zeitpunkt tₐᵤₛ (s. Fig.3c) wieder zurückgesetzt, wenn während der Aufladung der Kondensatoren 43 und 46 die steigende Spannung U₁ des Kondensators 43 die Spannung U₂ am Kondensator 46 wieder überschreitet.

Durch den oben beschriebenen Ablauf der Detektion des Signals wird sichergestellt, daß nur Impuls-Pakete mit bestimmter Frequenz und bestimmter Mindest-Sendedauer t₁ empfangen und detektiert werden und in der Folge zum Einschalten der Schaltstufe 6 führen.

## Patentansprüche

1. Aufweckschaltung für ein elektronisches Gerät, mit einem Eingangskreis (1) zum Empfangen von Infrarotsignalen, und mit einem an den Eingangskreis (1) angeschlossenen Verstärker (2), dessen Ausgang mit einer Schaltstufe (6) zum Einschalten des Gerätes verbunden ist, **dadurch gekennzeichnet, daß** der Eingangskreis (1) eine Parallelschaltung von zumindest zwei Serienschaltungen von Infrarotdetektoren (7 bis 10) sowie einen Parallelschwingkreis (11) enthält, und daß der Verstärker (2) ein Bandpaßverstärker (2'). ist, dessen Ausgang mit einem Signaldetektor (3) verbunden ist, an den die Schaltstufe (6) angeschlossen ist.

2. Aufweckschaltung nach Anspruch 1, **dadurch gekennzeichnet, daß** der Signaldetektor (3) mit zwei miteinander verbundenen Integrierkreisen (4, 4') und einem Komparator (5) ausgebildet ist, wobei der eine Eingang (5a) des Komparators (5) mit dem Ausgang des einen Integrierkreises (4) und der andere Eingang (5b) mit dem Ausgang des anderen Integrierkreises (4') verbunden ist.

3. Aufweckschaltung nach Anspruch 2, **dadurch gekennzeichnet, daß** der eine Integrierkreis (4) einen Kondensator (43) aufweist, der mit einer, einen Spannungsteiler bildenden Serienschaltung von Widerständen (41, 42) verbunden ist, daß der andere Integrierkreis (4) einen an den Abzweigungspunkt (47) des Spannungsteilers (41, 42) angeschlossenen Widerstand (45) und einen mit diesem Widerstand (45) verbundenen Kondensator (46) aufweist, wobei die Entlade-Zeitkonstante (τ₁) des einen Integrierkreises (4) kürzer als die Entlade-Zeitkonstante (τ₂) des anderen Integrierkreises (4') ist.

4. Aufweckschaltung nach einem der Ansprüche 1 bis 3, **dadurch gekennzeichnet, daß** der Bandpaßverstärker (2) ein mehrstufiger Transistorverstärker mit Gleichstromkopplung ist, wobei die Ruhe-Arbeitsströme der einzelnen Transistoren (15 bis 19) jeweils auf ein Minimum eingestellt sind.

5. Aufweckschaltung nach einem der Ansprüche 1 bis 4, **dadurch gekennzeichnet, daß** die untere Grenzfrequenz des Bandpaßverstärkers (2') an die untere Grenzfrequenz des Parällelschwingkreises (11) angepaßt ist.

## Claims

1. A wake-up circuit for an electronic device comprising an input circuit (1) for receiving infrared signals and an amplifier (2) connected to the input circuit (1), the output of the amplifier being connected to a switching circuit (6) for switching on the device, **characterized in that** the input circuit (1) includes a parallel arrangement of at least two series arrangements of infrared detectors (7 to 10) as well as a parallel resonant circuit (11), and that the amplifier (2) is a bandpass amplifier (2') the output of which being connected to a signal detector (3) to which the switching circuit (6) is connected.

2. A wake-up circuit according to claim 1, **characterized in that** the signal detector (3) is formed with two interconnected integrating circuits (4, 4') and a comparator (5), the one input (5a) of the comparator (5) being connected to the output of the one integrating circuit (4), and the other input (5b) being connected to the output of the other integrating circuit (4').

3. A wake-up circuit according to claim 2, **characterized in that** the one integrating circuit (4) comprises a capacitor (43) which is connected to a series arrangement of resistors (41, 42) which forms a voltage divider, that the other integrating circuit (4') comprises a resistor (45) connected to the branch-off point (47) of the voltage divider (41, 42) and a capacitor (46) connected to this resistor (45), the discharge time constant (τ₁) of the one integrating circuit (4) being shorter than the discharge time constant (τ₂) of the other integrating circuit (4').

4. A wake-up circuit according to any one of claims 1 to 3, **characterized in that** the bandpass amplifier (2) is a multi-stage transistor amplifier with direct current coupling, with the atrest working currents of the individual transistors (15 to 19) each being adjusted to a minimum.

5. A wake-up circuit according to any one of claims 1 to 4, **characterized in that** the lower cut-off frequency of the bandpass amplifier (2') is adapted to the lower cut-off frequency of the parallel resonant circuit (11).

## Revendications

1. Circuit de réveil pour un appareil électronique, comportant un circuit d'entrée (1) pour recevoir des signaux infrarouges, et un amplificateur (2) raccordé au circuit d'entrée (1) et dont la sortie est reliée à un étage de commutation (6) pour le branchement de l'appareil, **caractérisé en ce que** le circuit d'entrée (1) contient un circuit formé du montage en parallèle d'au moins deux circuits série de détecteurs d'infrarouge (7 à 10) ainsi qu'un circuit oscillant parallèle (11), et que l'amplificateur (2) est un amplificateur passe-bande (2'), dont la sortie est reliée à un détecteur de signaux (3), auquel est raccordé l'étage de commutation (6).

2. Circuit de réveil selon la revendication 1, **caractérisé en ce que** le détecteur de signaux (3) est relié à deux circuits d'intégrateurs (4, 4') reliés entre eux et à un comparateur (5), une entrée (5a) du comparateur (5) étant reliée à la sortie d'un circuit intégrateur (4), et l'autre entrée (5b) étant reliée à la sortie de l'autre circuit intégrateur (4').

3. Circuit de réveil selon la revendication 2, **caractérisé en ce qu'**un circuit intégrateur (4) possède un condensateur (43), qui est relié à un circuit série formé de résistances (41, 42) et constituant un diviseur de tension, que l'autre circuit intégrateur (4') comporte une résistance (45) raccordée au point de division (47) du diviseur de tension (41, 42) et un condensateur (46) relié à cette résistance (45), la constante de temps de décharge (τ₁) d'un circuit intégrateur (4) étant inférieur à la constante de temps de décharge (τ₂) de l'autre circuit intégrateur (4').

4. Circuit de réveil selon l'une des revendications 1 à 3, **caractérisé en ce que** l'amplificateur passe-bande (2) est un amplificateur à transistors à étages multiples avec couplage en courant continu, les courants de travail de repos de repos-travail des différents transistors (15 à 19) étant reliés respectivement au minimum.

5. Circuit de réveil selon l'une des revendications 1 à 4, **caractérisé en ce que** la fréquence limite inférieure de l'amplificateur passe-bande (2') est adaptée à la fréquence limite inférieure du circuit oscillant parallèle (11).
